# EUROPEAN PATENT SPECIFICATION

(11) **EP 2 872 864 B1**
(45) Date of publication and mention of the grant of the patent: **07.11.2018**
(21) Application number: 13753336.0
(22) Date of filing: 11.07.2013
(51) Int. Cl.: G01M 3/28

(54) **REFRIGERANT LEAK DETECTION SYSTEM AND METHOD**
SYSTEM UND VERFAHREN ZUR KÜHLMITTELLECKERKENNUNG.
SYSTÈME ET PROCÉDÉ DE DÉTECTION DE FUITE DE RÉFRIGÉRANT

(30) Priority: 11.07.2012 GB 201212363
(43) Date of publication of application: 20.05.2015
(73) Proprietor: GAH (Refrigeration Products) Limited, Framlingham Woodbridge Suffolk IP13 9AZ (GB)
(72) Inventor: PEAK, Bob, Woodbridge Suffolk IP12 2TW (GB)
(74) Representative: Williams Powell
(86) International application number: PCT/GB2013/051842
(87) International publication number: WO 2014/009732

(56) References cited:
- WO-A1-98/25122
- WO-A2-2007/116380
- US-A- 5 983 657
- US-A1- 2002 152 759
- US-B1- 6 701 722

## Description

### Field of the Invention

The present invention relates to a system and method that is particularly applicable to detection of refrigerant leakages in both static and transport refrigeration systems.

### Background to the Invention

Many businesses are now becoming much more aware of their environmental credentials with many specifically looking at their carbon footprint, especially with the UK Government pushing hard through DEFRA to reduce Carbon emissions with a very significant focus on refrigerants. Refrigerants by their very nature, the chemical compounds being used, can be particularly harmful to the environment if allowed to be released into the atmosphere.

Refrigerants are used in many applications and at many different scales ranging from white goods such as refrigerators, freezers and air-conditioners to larger scale refrigeration plants for applications such as building air conditioning, foodstuff refrigeration and the like to transport applications such as refrigerated trucks.

Back in the 1990's there was a major focus on ODP, the Ozone Depletion Potential, of refrigerants which resulted in the design of new refrigerants and the phasing out of the old gases. Modern gases have no ODP value, so are significantly better than they were, although the focus is now on the potential for these gases to act like CO₂ as a Green House gas and contribute to "Global Warming".

One of the most commonly used refrigerants in transport refrigeration applications is the R404A refrigerant which has a boiling point of -47 °C. It is particularly commonplace in Frozen or Dual (Frozen and Chill) applications.

All refrigerants are given a GWP value (Global Warming Potential), which is used as a means to compare the potential damaging effect of gases, if released to atmosphere, with the effect of a similar quantity of CO₂ if that were to be released. Values for the most commonly used refrigerants typically vary between 1300 and 3300, so for example, if 1 Kg of R404A were released in to the atmosphere it will have the same potentially damaging effect as releasing 3.3 Tonnes of CO₂.

In transport applications, a refrigeration system is subjected to vibration and movement issues that a conventional static system would not normally be exposed to. The vibration, movement and other strains on the system means that leaks can be commonplace, particularly with the relatively recent development and growth of "Home Delivery" supermarket operations. The home delivery scenario sees refrigerated trucks running into an environment that they would rarely have previously been used in i.e. Domestic/Urban areas. This subjects the trucks and fridge systems to extra rigours with traffic calming measures such as speed bumps and sleeping policemen and the negotiation of driveway entrances and kerb stones, yet further increasing vibration and bumps applied to the system.

Leaks of refrigerant are undesirable and often dangerous. In the case of R404A, the gas is colourless and is considered to have poor warning conditions at low concentrations. Inhalation can also be dangerous.

US 2002/0152759 discloses the evacuation of a refrigerant system for leak testing
US 6 701 722 discloses a method of detecting refrigerant leakage in an air conditioner.

### Statement of Invention

According to an aspect of the present invention, there is provided a monitoring system for a refrigeration system comprising a controller and a pressure monitoring unit,
the controller being configured to control operation of a drive to evacuate refrigerant from a second section of the refrigeration system into a first section until pressure in the second section is substantially at a predetermined threshold and then substantially seal the second section in a substantially evacuated state;
the pressure monitoring unit being configured to monitor the pressure of the second section while in the substantially evacuated state, the monitoring system being arranged to communicate an alert upon the pressure monitoring unit detecting a change in pressure of the second section while in the substantially evacuated state.

The drive comprises a compressor of the refrigeration system or it may be a compressor or separate component for another use or dedicated for use by the monitoring system.

Preferably, the controller is configured to cause closure of one or more valves to substantially seal the second section in the substantially evacuated state. The valves may be part of the monitoring system or part of the refrigeration circuit of the refrigeration system.

The valves may comprise a first valve and a second valve operable, when closed, to substantially seal the second section, the controller being configured to close one of the first and second valves prior to evacuating the refrigerant and close the other valve upon the pressure reaching the predetermined threshold.

The monitoring system (or refrigeration system) may further comprise a vessel in the first section configured to receive and store refrigerant while said second section is in the substantially evacuated state.

The monitoring system may further comprise a low pressure switch coupled to the drive and configured to disable the drive when pressure in the second circuit section reaches the predetermined threshold.

The controller may be configured to override operation of one or more of the low pressure switch and the drive once the drive is disabled.

The controller may be configured, when the second section is in the substantially evacuated state, to open one or more of the valves to allow a controlled amount of refrigerant to pass from the first section into the second section so that the second section reaches a predetermined pressure.

The predetermined threshold may be atmospheric pressure.

The predetermined threshold may be about 7 atm (approximately 100 psi).

The controller may be configured stop evacuation prior to fully evacuating the second section and leave refrigerant to a predetermined pressure in the second section.

The predetermined threshold may be an approximate target, the controller being configured to substantially seal the second section when pressure in the second section is within a range (for example +/- a predetermined pressure) about the predetermined threshold, the pressure monitoring unit being arranged to determine pressure of the second section when substantially sealed and monitor for changes with respect to the determined pressure.

The monitoring system may be arranged to receive data from one or more further sensors and is arranged to use said received data to determine whether to communicate an alert upon the pressure monitoring unit detecting a change in pressure of the second section while in the substantially evacuated state.

At least one of the further sensors may be external to the refrigeration system and is configured to monitor one or more environmental factors that concern the refrigeration system.

The further sensors may be selected from a set including motion sensors, ambient temperature sensors orientation sensors, and acceleration sensors.

The controller may include a trigger condition arranged to trigger operation of the controller to substantially evacuate the second section for a predetermined period of time and subsequently return refrigerant to the second section.

The trigger condition may comprise one or more selected from a set including: time lapse since last operation, determining a predetermined event associated with the refrigeration system or environment has occurred, determining a predetermined pressure/temperature relationship has been encountered inside the refrigeration system during operation.

Upon communicating an alert, the monitoring system may be configured to shut the refrigeration system down.

Upon communicating an alert, the monitoring system may be configured to pump the refrigerant into a holding vessel or section of the refrigeration system that is isolated from the second section.

The alert may comprise one or more of a notification to an operator via visual, audible or electronic means and/or logging an alert in a data collection system.

The monitoring system may be arranged to obtain location data on the location of the refrigeration system and identify the location in the alert.

According to another aspect of the present invention, there is provided a method for detecting refrigerant leakage comprising:
evacuating refrigerant from a second section of a refrigeration system into a first section until pressure in the second section is substantially at a predetermined threshold;
closing at least one valve to substantially seal the first section from the second section;
monitoring the pressure of the second section over time; and,
upon detecting a change in said monitored pressure, triggering an action.

Embodiments of the present invention seek to provide a system and method for refrigerant leak detection. In selected embodiments, dynamic monitoring, pump and valves are used to perform checking and in preferred embodiments, refrigerant can be substantially contained in the event of a system leak.

In preferred embodiments, the refrigeration system is regularly pumped into a state where the majority of refrigerant is held in a vessel or substantially robust part of the system where it can be safely contained while the rest of the system is monitored for leaks. Certain parts of a transport system are more susceptible to leaks than others because of the use of flexible hoses and the relative movement of parts of the vehicle i.e. between the cab and the chassis or the engine and the chassis. These parts can all be isolated and monitored for leaks.

Advantageously, by evacuating refrigerant during a "down time" period, embodiments of the present invention are able to detect even a small leak in a refrigeration circuit that may go overlooked for some time in systems that attempt to monitor refrigerant pressure during normal operation.

It will be appreciated that a refrigeration circuit may be divided into multiple sections, each section in turn being evacuated and monitored (or else multiple sections being evacuated in parallel to another section or sections or a common storage vessel and then separately monitored).

### Brief Description of the Drawings

An embodiment of the present invention will now be described in detail, by way of example only, with reference to the accompanying drawings, in which:
Figure 1 is a schematic diagram of portions of a refrigeration system including a leak detection system according to an embodiment of the present invention; and,
Figure 2 is a schematic diagram illustrating an embodiment of the present invention in more detail.

### Detailed Description

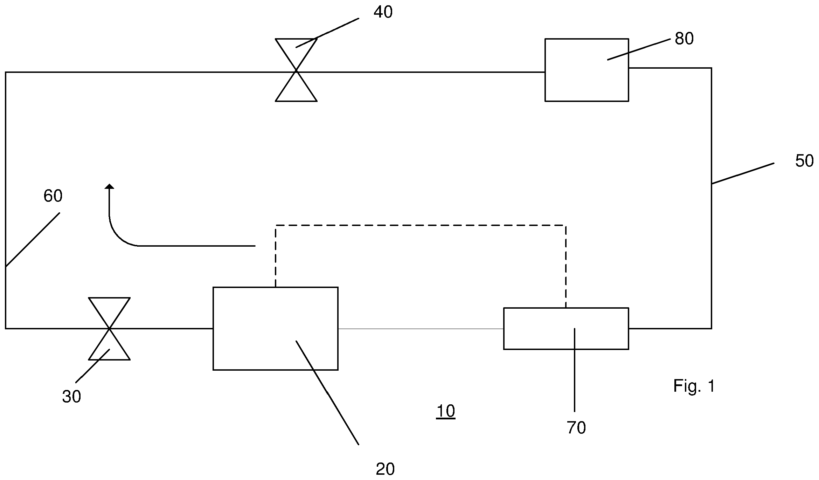

Figure 1 is a schematic diagram of portions of a refrigeration system including a leak detection system according to an embodiment of the present invention.

The refrigeration system 10 includes a compressor 20 and a refrigerant circuit. In the illustrated embodiment, the refrigerant circuit is divided into second 50 and first 60 circuit sections. Under control of a controller (not shown), values 30, 40 can be opened or closed so as to complete or break the circuit. With the valves in the open position, the refrigerant can be pumped around the circuit sections 60, 50 as needed. When the valves are in the closed position, passage of refrigerant from the first circuit section to the second is prevented.

In operation, valve 40 is closed and substantially all of the refrigerant is evacuated from the second section 50 into the first section 60 until pressure in the second section reaches a predetermined threshold and triggers a low pressure switch 70 which turns off the compressor. At this stage, valve 30 is also closed so as seal the first circuit section from the second.

The low pressure switch 70 is preferably linked to the compressor so as to disable the compressor when pressure in the second circuit section reaches a predetermined threshold (for example near atmospheric pressure). In a typical refrigeration system, pumping refrigerant such that the second section was at atmospheric pressure would mean that in the region of approximately 95% of the refrigerant was in the first section 60. Preferably, a vessel such as a liquid receiver is provided in the first circuit section so as to be able to safely store the received refrigerant.

Once the compressor is turned off, the controller may override operation of the low pressure switch and compressor so as to prevent them being re-initialised during testing. One or more of the valves may then be opened to allow a controlled amount of refrigerant to pass from the first section 60 into the second section 50 so as to reach a predetermined pressure, for example 100 psi (approx. 7 atm).

A pressure monitoring system 80 is then triggered to monitor pressure of the second section 50 over time with respect to the predetermined pressure. A drop in pressure over time is indicative of a leak and the pressure monitoring system may then be arranged to trigger an audio and/or visual alert and other actions such as described below. The pressure monitoring system 80 may be connected to the controller and/or sensors such as motion, ambient temperature or systems for monitoring other factors that may impact on pressure of the second section 50 so as to be able to discount these from assessment of leaks.

Monitoring can be done either on some time based criteria such as hourly or daily, or function based such as after a defrost or at set point or it could be done through the monitoring of the complex pressure / temperature relationships encountered inside a running system.

Once a potential leak is identified the onboard electronics will be programmed to take a number of actions, firstly to shut the refrigeration system down and pump the refrigerant into a holding state (if it is not already there) and secondly to notify the operator of this condition via some visual, audible or electronic means (possibly via links into the existing GPS Tracking or onboard data collection systems regularly being employed).

The refrigerant can then be held in this "contained" state until a qualified engineer is summoned to attend the vehicle to identify and repair the leak after which the system can be returned back to normal operation.

While preferred embodiments have the refrigerant substantially expelled from the circuit portion to be tested before re-introducing controlled refrigerant to a predetermined pressure level, in other embodiments, expulsion of the refrigerant may stop short so as to leave the predetermined pressure in the circuit portion to be tested. Indeed, the predetermined threshold need not be absolute and an approximate pressure level may be sufficient, that pressure being the starting point from which the pressure monitoring system then monitors for drops indicative of leaks.

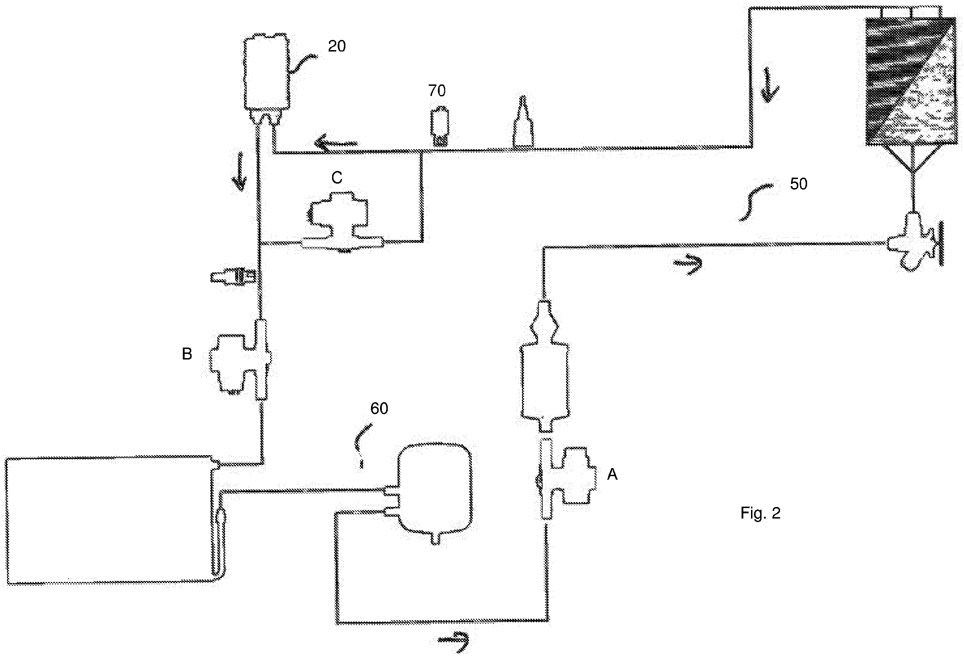

Figure 2 is a schematic diagram illustrating an embodiment of the present invention in more detail.

Operation in this embodiment is substantially the same as in Figure 1 but valves labelled A, B and C are used to control refrigerant passage. In operation, valves A and C are closed and B left open. The compressor pumps refrigerant into the first section 60. Once the low pressure switch (LP switch) is triggered, value B is closed. Substantially all of the refrigerant is then in the first section, typically in liquid phase in the liquid receiver having condensed in the condenser.

Valve C is opened to allow the refrigerant between the compressor and valve B to escape back into the second circuit section (which also allows testing of the pipe between the compressor and valve B which is a common point of failure). Valve A or B can be controlled to allow escape of a predetermined level of refrigerant so as to pressurise the second section to the desired level as discussed with reference to Figure 1 above.

## Claims

1. A monitoring system for a refrigeration system (10) comprising a controller and a pressure monitoring unit (80), the controller being configured to control operation of a drive to evacuate refrigerant from a second section (50) of the refrigeration system
**characterised by** releasing the refrigerant into a first section (60) until pressure in the second section is substantially at a predetermined threshold and then substantially seal the second section in a substantially evacuated state;
and
the pressure monitoring unit being configured to monitor the pressure of the second section while in the substantially evacuated state, the monitoring system being arranged to communicate an alert upon the pressure monitoring unit detecting a change in pressure of the second section while in the substantially evacuated state.

2. A monitoring system as claimed in claim 1, wherein the drive comprises a compressor of the refrigeration system.

3. A monitoring system as claimed in claim 1 or 2, wherein the controller is configured to cause closure of one or more valves to substantially seal the second section in the substantially evacuated state.

4. A monitoring system as claimed in claim 1 or 2, further comprising a first valve and a second valve operable, when closed, to substantially seal the second section, the controller being configured to close one of the first and second valves prior to evacuating the refrigerant and close the other valve upon the pressure reaching the predetermined threshold.

5. A monitoring system as claimed in any preceding claim, further comprising a vessel in the first section configured to receive and store refrigerant while said second section is in the substantially evacuated state.

6. A monitoring system as claimed in any preceding claim, further comprising a low pressure switch coupled to the drive and configured to disable the drive when pressure in the second circuit section reaches the predetermined threshold.

7. A monitoring system as claimed in claim 3 or 4, wherein the controller is configured, when the second section is in the substantially evacuated state, to open one or more of the valves to allow a controlled amount of refrigerant to pass from the first section into the second section so that the second section reaches a predetermined pressure.

8. A monitoring system as claimed in any preceding claim, wherein the predetermined threshold is atmospheric pressure.

9. A monitoring system as claimed in any of claims 1 to 7, wherein the predetermined threshold is about 7 atm (approximately 100 psi).

10. A monitoring system as claimed in any of claims 1 to 7, wherein the controller is configured stop evacuation prior to fully evacuating the second section and leave refrigerant to a predetermined pressure in the second section.

11. A monitoring system as claimed in any preceding claim, wherein the predetermined threshold is approximate, the controller being configured to substantially seal the second section when pressure in the second section is within a range about the predetermined threshold, the pressure monitoring unit being arranged to determine pressure of the second section when substantially sealed and monitor for changes with respect to the determined pressure.

12. A monitoring system as claimed in any preceding claim, wherein the monitoring system is arranged to receive data from one or more further sensors and is arranged to use said received data to determine whether to communicate an alert upon the pressure monitoring unit detecting a change in pressure of the second section while in the substantially evacuated state, at least one of the further sensors being external to the refrigeration system and is configured to monitor one or more environmental factors that concern the refrigeration system, the further sensors being selected from a set including motion sensors, ambient temperature sensors orientation sensors, and acceleration sensors.

13. A monitoring system as claimed in any preceding claim, wherein the controller includes a trigger condition arranged to trigger operation of the controller to substantially evacuate the second section for a predetermined period of time and subsequently return refrigerant to the second section, the trigger condition comprising one or more selected from a set including: time lapse since last operation, determining a predetermined event associated with the refrigeration system or environment has occurred, determining a predetermined pressure/temperature relationship has been encountered inside the refrigeration system during operation.

14. A monitoring system as claimed in any preceding claim, wherein upon communicating an alert, the monitoring system being configured to pump the refrigerant into a holding vessel or section of the refrigeration system that is isolated from the second section.

15. A method for detecting refrigerant leakage comprising:
evacuating refrigerant from a second section of a refrigeration system into a first section until pressure in the second section is substantially at a predetermined threshold;
closing at least one valve to substantially seal the first section from the second section;
monitoring the pressure of the second section over time; and,
upon detecting a change in said monitored pressure, triggering an action.

## Patentansprüche

1. Überwachungssystem für ein Kühlsystem (10), aufweisend eine Steuereinrichtung und eine Drucküberwachungseinheit (80), wobei die Steuereinrichtung ausgebildet ist, um den Betrieb eines Antriebs zum Evakuieren von Kühlmittel von einem zweiten Abschnitt (50) des Kühlsystems zu steuern, **gekennzeichnet durch** Abgeben des Kühlmittels in einen ersten Abschnitt (60), bis der Druck in dem zweiten Abschnitt im Wesentlichen an einem vorbestimmten Schwellenwert ist und dann im Wesentlichen den zweiten Abschnitt in einen im Wesentlichen evakuierten Zustand abdichtet, und die Drucküberwachungseinheit ausgebildet ist, um den Druck des zweiten Abschnitts zu überwachen, während sich dieser im Wesentlichen im evakuierten Zustand befindet, wobei das Überwachungssystem ausgebildet ist, eine Warnung zu übermitteln, nachdem die Drucküberwachungseinheit eine Druckänderung des zweiten Abschnitts in dem im Wesentlichen evakuierten Zustand erfasst.

2. Überwachungssystem nach Anspruch 1, bei dem der Antrieb einen Kompressor des Kühlsystems aufweist.

3. Überwachungssystem nach Anspruch 1 oder 2, bei dem die Steuereinrichtung so ausgebildet ist, dass sie das Schließen eines oder mehrerer Ventile veranlasst, um den zweiten Abschnitt in dem im Wesentlichen evakuierten Zustand im Wesentlichen abzudichten.

4. Überwachungssystem nach Anspruch 1 oder 2, weiterhin aufweisend ein erstes Ventil und ein zweites Ventil, das betreibbar ist, wenn es geschlossen ist, um den zweiten Abschnitt im Wesentlichen abzudichten, wobei die Steuereinrichtung ausgebildet ist, eines der ersten und zweiten Ventile vor dem Evakuieren des Kühlmittels zu schließen und das andere Ventil zu schließen, wenn der Druck den vorbestimmten Schwellenwert erreicht.

5. Überwachungssystem nach einem der vorhergehenden Ansprüche, weiterhin aufweisend ein Gefäß in dem ersten Abschnitt, das zum Aufnehmen und Speichern von Kühlmittel ausgebildet ist, während sich der zweite Abschnitt in dem im Wesentlichen evakuierten Zustand befindet.

6. Überwachungssystem nach einem der vorhergehenden Ansprüche, weiterhin aufweisend einen Niederdruckschalter, der mit dem Antrieb verbunden ist und der ausgebildet ist, den Antrieb zu sperren, wenn der Druck in dem zweiten Leitungsabschnitt den vorbestimmten Schwellenwert erreicht

7. Überwachungssystem nach Anspruch 3 oder 4, bei dem die Steuereinrichtung ausgebildet ist, wenn sich der zweite Abschnitt in dem im Wesentlichen evakuierten Zustand befindet, eines oder mehrere der Ventile zu öffnen, um zu ermöglichen, dass eine geregelte Menge an Kühlmittel von dem ersten Abschnitt in den zweiten Abschnitt übergeht, so dass der zweite Abschnitt einen vorbestimmten Druck erreicht.

8. Überwachungssystem nach einem der vorhergehenden Ansprüche, bei dem der vorbestimmte Schwellenwert der Atmosphärendruck ist.

9. Überwachungssystem nach einem der Ansprüche 1 bis 7, bei dem der vorbestimmte Schwellenwert ungefähr 7 atm (ungefähr 100 psi) beträgt.

10. Überwachungssystem nach einem der Ansprüche 1 bis 7, bei dem die Steuereinrichtung ausgebildet ist, die Evakuierung zu stoppen, bevor der zweite Abschnitt vollständig evakuiert wird und Kühlmittel in dem zweiten Abschnitt mit einem vorbestimmten Druck zu belassen.

11. Überwachungssystem nach einem der vorhergehenden Ansprüche, bei dem der vorbestimmte Schwellenwert näherungsweise ist, wobei die Steuereirichtung ausgebildet ist, den zweiten Abschnitt im Wesentlichen abzudichten, wenn der Druck in dem zweiten Abschnitt innerhalb eines Bereichs um den vorbestimmten Schwellenwert liegt, wobei die Drucküberwachungseinheit ausgebildet ist, den Druck des zweiten Abschnitts zu bestimmen, wenn er im Wesentlichen abgedichtet ist, und Änderungen in Bezug auf den bestimmten Druck zu überwachen.

12. Überwachungssystem nach einem der vorhergehenden Ansprüche, bei dem das Überwachungssystem ausgebildet ist, Daten von einem oder mehreren weiteren Sensoren zu empfangen und ausgebildet ist, die empfangenen Daten zu verwenden, um zu bestimmen, ob eine Warnung übermittelt werden soll, nachdem die Drucküberwachungseinheit eine Druckänderung des zweiten Abschnitts erfasst, während sich dieser in dem im Wesentlichen evakuierten Zustand befindet, wobei mindestens einer der weiteren Sensoren extern zu dem Kühlsystem ist und ausgebildet ist, um einen oder mehrere Umgebungsfaktoren zu überwachen, die das Kühlsystem betreffen, wobei die weiteren Sensoren aus einem Satz ausgewählt sind, der Bewegungssensoren, Umgebungstemperatursensoren, Orientierungssensoren und Beschleunigungssensoren umfasst.

13. Überwachungssystem nach einem der vorhergehenden Ansprüche, bei dem die Steuereirichtung eine Auslösebedingung aufweist, die ausgebildet ist, um einen Betrieb der Steuereinrichtung auszulösen, um den zweiten Abschnitt für eine vorbestimmte Zeitspanne im Wesentlichen zu evakuieren und anschließend Kühlmittel zu dem zweiten Abschnitt zurückzuführen, wobei die Auslösebedingung eines oder mehrere aufweist, die aus einem Satz ausgewählt sind, der umfasst: verstrichene Zeit seit der letzten Operation, Bestimmen dass ein vorbestimmtes Ereignisses in Verbindung mit dem Kühlsystem oder der Umgebung stattgefunden hat, Bestimmen dass eine vorbestimmte Druck/Temperatur-Beziehung während des Betriebs im Kühlsystem angetroffen wurde.

14. Überwachungssystem nach einem der vorhergehenden Ansprüche, bei dem beim Mitteilen einer Warnung das Überwachungssystem ausgebildet ist, das Kühlmittel in ein Haltegefäß oder einen Abschnitt des Kühlsystems zu pumpen, das von dem zweiten Abschnitt isoliert ist.

15. Verfahren zum Detektieren von Kühlmittelaustritt, aufweisend:
Evakuieren von Kühlmittel von einem zweiten Abschnitt eines Kühlsystems in einen ersten Abschnitt, bis der Druck in dem zweiten Abschnitt im Wesentlichen bei einem vorbestimmten Schwellenwert ist;
Schließen von mindestens einem Ventil, um den ersten Abschnitt im Wesentlichen von dem zweiten Abschnitt abzudichten;
Überwachen des Drucks des zweiten Abschnitts über die Zeit; und
beim Erfassen einer Änderung des überwachten Drucks, Auslösen einer Aktion.

## Revendications

1. Système de surveillance pour un système de réfrigération (10) comprenant une unité de commande et une unité de surveillance de pression (80),
l'unité de commande étant configurée pour commander le fonctionnement d'un entraînement pour évacuer un réfrigérant à partir d'une seconde section (50) du système de réfrigération, **caractérisé par** relâcher le réfrigérant dans une première section (60) jusqu'à ce que la pression dans la seconde section soit sensiblement à un seuil prédéterminé, puis sceller sensiblement la seconde section dans un état sensiblement évacué ; et
l'unité de surveillance de pression étant configurée pour surveiller la pression de la seconde section dans l'état sensiblement évacué, le système de surveillance étant agencé pour communiquer une alerte lorsque l'unité de surveillance de pression détecte un changement de la pression de la seconde section dans l'état sensiblement évacué.

2. Système de surveillance selon la revendication 1, dans lequel l'entraînement comprend un compresseur du système de réfrigération.

3. Système de surveillance selon la revendication 1 ou 2, dans lequel l'unité de commande est configurée pour entraîner la fermeture d'une ou plusieurs vannes pour sceller sensiblement la seconde section dans l'état sensiblement évacué.

4. Système de surveillance selon la revendication 1 ou 2, comprenant en outre une première vanne et une seconde vanne actionnables, lorsqu'elles sont fermées, pour sceller sensiblement la seconde section, l'unité de commande étant configurée pour fermer l'une parmi les première et seconde vannes avant d'évacuer le réfrigérant et fermer l'autre vanne lorsque la pression atteint le seuil prédéterminé.

5. Système de surveillance selon l'une quelconque des revendications précédentes, comprenant en outre un réceptacle dans la première section configuré pour recevoir et stocker le réfrigérant tandis que ladite seconde section est dans l'état sensiblement évacué.

6. Système de surveillance selon l'une quelconque des revendications précédentes, comprenant en outre un commutateur basse pression couplé à l'entraînement et configuré pour désactiver l'entraînement lorsque la pression dans la seconde section de circuit atteint le seuil prédéterminé.

7. Système de surveillance selon la revendication 3 ou 4, dans lequel l'unité de commande est configurée, lorsque la seconde section est dans l'état sensiblement évacué, pour ouvrir une ou plusieurs des vannes pour permettre à une quantité contrôlée de réfrigérant de passer de la première section à la seconde section de telle sorte que la seconde section atteint une pression prédéterminée.

8. Système de surveillance selon l'une quelconque des revendications précédentes, dans lequel le seuil prédéterminé est la pression atmosphérique.

9. Système de surveillance selon l'une quelconque des revendications 1 à 7, dans lequel le seuil prédéterminé est environ 7 atm (approximativement 100 psi).

10. Système de surveillance selon l'une quelconque des revendications 1 à 7, dans lequel l'unité de commande est configurée pour arrêter l'évacuation avant d'évacuer entièrement la seconde section et laisser le réfrigérant à une pression prédéterminée dans la seconde section.

11. Système de surveillance selon l'une quelconque des revendications précédentes, dans lequel le seuil prédéterminé est approximatif, l'unité de commande étant configurée pour sceller sensiblement la seconde section lorsque la pression dans la seconde section se situe dans une plage autour du seuil prédéterminé, l'unité de surveillance de pression étant agencée pour déterminer la pression de la seconde section lorsqu'elle est sensiblement scellée et surveiller des changements par rapport à la pression déterminée.

12. Système de surveillance selon l'une quelconque des revendications précédentes, dans lequel le système de surveillance est agencé pour recevoir des données en provenance d'un ou plusieurs autres capteurs et est agencé pour utiliser lesdites données reçues pour déterminer s'il faut communiquer une alerte lorsque l'unité de surveillance de pression détecte un changement de la pression de la seconde section dans l'état sensiblement évacué, au moins un parmi les autres capteurs étant externe au système de réfrigération et configuré pour surveiller un ou plusieurs facteurs environnementaux relatifs au système de réfrigération, les autres capteurs étant choisis parmi un ensemble comprenant des capteurs de mouvement, des capteurs de température ambiante, des capteurs d'orientation et des capteurs d'accélération.

13. Système de surveillance selon l'une quelconque des revendications précédentes, dans lequel l'unité de commande comprend une condition de déclenchement agencée pour déclencher le fonctionnement de l'unité de commande pour sensiblement évacuer la seconde section pendant une période de temps prédéterminée, puis renvoyer le réfrigérant à la seconde section, la condition de déclenchement comprenant un ou plusieurs choisis parmi un ensemble comprenant : un délai depuis le dernier fonctionnement, la détermination qu'un événement prédéterminé associé au système de réfrigération ou à l'environnement s'est produit, la détermination qu'une relation de température/pression prédéterminée a été rencontrée à l'intérieur du système de réfrigération pendant le fonctionnement.

14. Système de surveillance selon l'une quelconque des revendications précédentes, dans lequel, lors de la communication d'une alerte, le système de surveillance est configuré pour pomper le réfrigérant dans un réceptacle ou section de confinement du système de réfrigération, qui est isolé de la seconde section.

15. Procédé de détection de fuite de réfrigérant, comprenant :
évacuer du réfrigérant à partir d'une seconde section d'un système de réfrigération dans une première section jusqu'à ce que la pression dans la seconde section soit sensiblement à un seuil prédéterminé ;
fermer au moins une vanne pour sceller sensiblement la première section par rapport à la seconde section ;
surveiller la pression de la seconde section au fil du temps ; et
lors de la détection d'un changement de ladite pression surveillée, déclencher une action.
